# EUROPEAN PATENT APPLICATION

(11) **EP 1 304 870 A1**
(43) Date of publication of application: **23.04.2003**
(21) Application number: 01402705.6
(22) Date of filing: 19.10.2001
(51) Int. Cl.: H04N 3/233, H04N 3/27

(54) **Deflection circuit for a cathode ray tube and display device**

(71) Applicant: Broadcast Television Systems Cameras B.V., 4827 HG Breda (NL)
(72) Inventor: Van den Herik, Florus Bernardus, Oosterhout 4907 (NL)
(74) Representative: Bonnans, Arnaud

(57) **Abstract**

A deflection circuit for a cathode ray tube includes a deflection coil (L_{defl}), at least an S-capacitor (C_{S}) and a linearity coil (Lₗᵢₙ) wound around a magnetic core. A control coil (L_{control}) is wound around the magnetic core and a control circuit supplies a current in the control coil.

A display device with a cathode ray tube and such a deflection circuit is also proposed.

## Description

The invention relates to a deflection circuit for a cathode ray tube and to a display device.

Horizontal deflection of the electron beam in cathode ray tubes is controlled by a deflection coil. In order to reduce as far as possible the nonlinearities in the trace of the electron beam along a line on the screen, a S-capacitor and a linearity coil are mounted in series with the deflection coil, as shown for instance in U.S. patent No. 4,176,303.

The linearity coil is a partly-saturated coil which working point is set by a permanent magnet. In known solutions, the magnet can be adjusted so as to vary the working point of the linearity coil and to adjust to operating conditions.

These solutions are however cumbersome when operating conditions are liable to frequent variations, for instance when the cathode ray tube has to display images of various standards having different line frequencies.

The invention therefore seeks to provide a deflection circuit where control of the linearity correction is made more easily.

The invention proposes a deflection circuit for a cathode ray tube with a deflection coil, at least an S-capacitor and a linearity coil wound around a magnetic core, wherein a control coil wound around the magnetic core and wherein a control circuit for supplying a current in the control coil.

According to preferred embodiments :
- said control circuit includes means for adjusting the current in the control coil ;
- said control circuit includes means for adjusting the current in the control coil in a range comprising positive and negative values ;
- said control circuit includes a controller for switched-mode generation of a voltage creating the current in the control coil ;
- the controller is connected to a feedback loop whereby the current in the control coil is regulated to an adjustable value ;
- the feedback loop includes a comparator which carries on a first input a voltage representative of the current in the control coil and on a second input an adjustable voltage ;

The invention also propose a display device with a cathode ray tube and such a deflection circuit. Preferably, the display device has the ability to display images according to a plurality of formats and said adjustable value is dependent on the format. According to a possible embodiment, the display device has the ability to display images according to a plurality of formats and said adjustable voltage is dependent on the format.

The invention and other features thereof will be understood in the light of the following description made with reference to the attached drawing where
- figure 1 represents the main elements of a deflection circuit according to the invention ;
- figure 2 represents a detailed implementation of the invention.

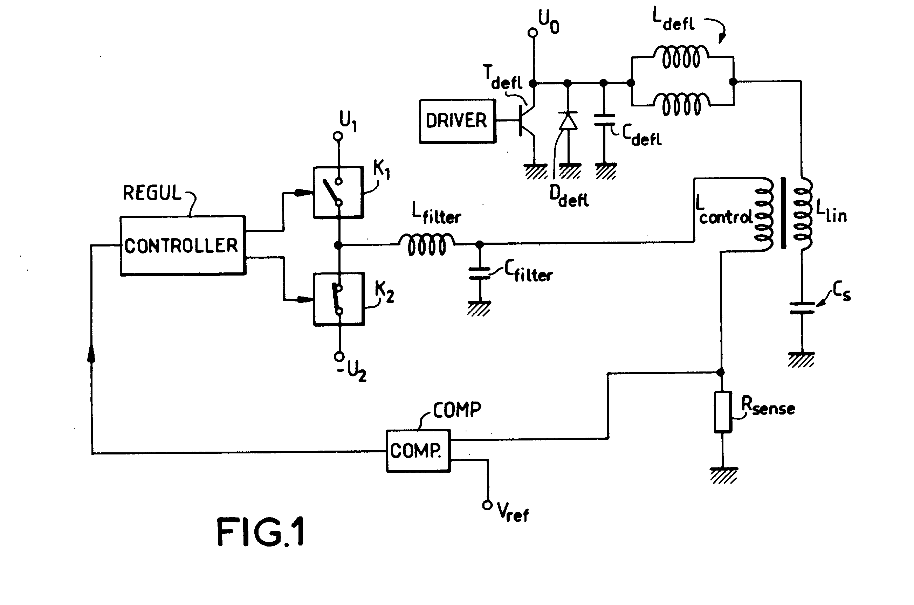

As shown in figure 1, a deflection circuit of a display using a cathode ray tube (CRT) has a deflection coil L_{defl} connected in series with a linearity coil Lₗᵢₙ and a S-capacitor C_{S}. The S-capacitor C_{S} is connected between the linearity coil Lₗᵢₙ and ground. The deflection coil Lₗᵢₙ is connected between a source of voltage U₀ and the linearity coil Lₗᵢₙ.

At its end connected to the source of voltage U₀, the deflection coil L_{defl} is also connected to ground through a transistor T_{defl}, a diode D_{defl} and a capacitor C_{defl} in parallel. The gate of the transistor T_{defl} is controlled by a horizontal driver circuit for generation of a sawtooth current in the deflection coil L_{defl}.

In the present embodiment, the deflection coil L_{defl} consists of two coils in parallel, which solution is of course given as an example.

A separate control coil L_{control} is associated with the linearity coil L_{defl} on the same magnet core. By controlling the current in the control coil L_{control}, it is possible to ajust the saturation point in the linearity coil L_{defl}.

The control coil L_{control} is connected at one end to ground via a resistor Rₛₑₙₛₑ and to the output of a low-pass filter at the other end. The common point between the control coil L_{control} and the resistor Rₛₑₙₛₑ thus provides a voltage representative of the current in the control coil L_{control}, which voltage is transmitted to a first input of a comparator COMP where it is compared with a reference voltage V_{ref} applied to a second input of the comparator COMP.

As a result of this comparison, the comparator COMP outputs a signal to a controller REGUL which accordingly activates a first switch K1 connected between a first (positive) source of voltage U1 and the input of the low-pass filter, or a second switch K2 connected between a second (negative) source of voltage -U2 and the input of the low-pass filter.

The low-pass filter is advantageously a LC filter : an inductor L_{filter} and a capacitor C_{filter} are connected in series between the input of the filter and ground ; the common point between inductor L_{filter} and capacitor L_{filter} realises the output of the filter.

The controller REGUL provides switch-mode generation of a current within the control coil L_{control} ; thanks to the feedback arrangement, this current has a value Iₙₒᵣₘ generating the voltage Vref in the resistor Rₛₑₙₛₑ in normal operation. Thanks to the use of a positive voltage U1 and a negative voltage - U2, it is possible to generate a positive or a negative current in the control coil L_{control}, which greatly widens the range in which the saturation point can be adjusted.

As the combination of the magnetic fields generated by the control coil L_{control} and by the linearity coil Lₗᵢₙ has to be taken into account when considering the saturation point of the core, the saturation point when the current Iₗᵢₙ in the linearity coil Lₗᵢₙ alone varies depends on the current I_{control} in the control coil L_{control}. By generating an adequate reference voltage V_{ref}, for instance by a micro-controller of the display, depending on the linefrequency of the displayed image, it is thus possible to adjust the current I_{control} and hence the saturating point of the linearity coil Lₗᵢₙ.

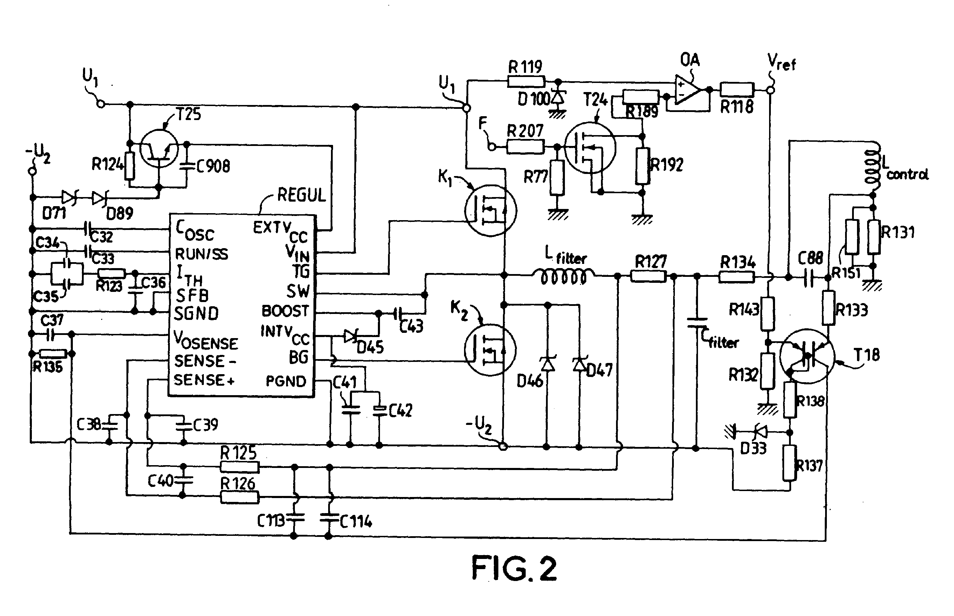

A possible circuit for generating current for the control coil L_{control} is represented on figure 2.

The main part of the controller REGUL is a switching regulator controller IC, precisely a LTC 1435 from Linear Technology. At its pins TG and BG, the controller respectively controls the gates of a first MOSFET transistor K1 (realising switch K1 of figure 1) and of a second MOSFET transistor K2 (realising switch K2 of figure 1).

Depending on the control of the transistors K1, K2, pin SW is set to U₁ or ―U₂ in a switched-mode fashion. Pin SW is situated at the input of the previously-mentioned low-pass filter thus realising at the ouput of the low-pass filter (connection between C_{filter} and R127 on figure 2) a DC voltage which value is dependent on the duty cycle of the active switch K1 or K2. This DC voltage generates a current through resistor R134 which supplies the control coil L_{control}.

This current also crosses a network of resistors R151, R131 (realising Rₛₑₙₛₑ of figure 1) and thereby gives rise to a feedback voltage which is passed to a first input of two-transistor chip T18 through a further resistor R133. The chip T18 also carries the reference voltage V_{ref} through resistor R143 on a second input.

The two-transistor chip T18 acts as a voltage to current regulator which generates on its output a current depending on the difference between the feedback voltage and the reference voltage. The current output from chip T18 realises across R135 a voltage which is applied to pin V_{0SENSE} of the controller IC REGUL.

The controller IC thus receives on its feedback pin V_{0SENSE} a voltage representative of the difference between V_{ref} and the feedback voltage indicative of the current in the control coil L_{control}. Thanks to this feedback loop, the circuit of figure 2 consequently regulates the current in the control coil L_{control}.

Figure 2 also indicates a possible implementation of a circuit generating voltage V_{ref}.

A micro-processor of the display generates a high level or a low level on pin F depending on the format of the displayed image. For instance, a 720-point image corresponds to a high level on pin F and a 1080-point image corresponds to a low level on pin F.

As clear from figure 2, the transistor T24 will be passing or blocked depending on the high or low level at F, which means that the resistor will be short-circuited or not depending on the level at F. As the Zener diode D100 realises a stabilised voltage of 2.5 V, the operational-amplifier OA realises a reference voltage V_{ref} of 5V when the level at F is high and of 3.3 V when the level at F is low.

With Rₛₑₙₛₑ = 0.5 Ω, we obtain with the circuit of figure 2 a current Iₙₒᵣₘ in the control coil of 120 mA in 720-point mode (high level at F) and 60 mA in 1080-point mode (low level at F).

Further explanations on the circuit of figure 2 can be found in the LTC 1435 datasheet.

For practical implementation, the following values can be used :
R77 = 100 kΩ ; R119 = 4.7 kΩ ; R123 = 68 kΩ ; R118 = 100 Ω ; R120 = 47kΩ ; R124 = 3.3 kΩ ; R125 = 100 Ω ; R126 = 100 Ω ; R127 = 1 Ω ; R131 = 1 Ω ; R132 = 220 Ω ; R133 = 220 Ω ; R134 = 0.15 Ω ; R135 = 15 kΩ ; R137 = 1 kΩ ; R138 = 10 kΩ ; R143 = 4.7 kΩ ; R151 = 1 Ω ; R189 = 47 kΩ ; R192 = 100 kΩ ; R207 = 100 kΩ
C32 = 68 pF ; C33 = 470 nF ; C34 = 2.2 nF ; C35 = 1 nF ; C36 = 680 pF ; C37 = 100 pF ; C38 = 1 nF ; C39 = 1 nF ; C40 = 1 nF ; C41 = 22 nF ; C42 = 6.8 µF ; C43 = 100 nF ; C88 = 100 nF ; C113 = 470 nF ; C114 = 470 nF ; C908 = 100 nF
C_{filter} = 66 µF
L_{filter} = 276 µH
U₁ = U₂ = 7 V

K1 and K2 are 2 MOSFETs referenced PHT6N03LT.

The invention is of course not limited to the above described embodiment. Notably, the invention also applies in systems with more than 2 formats and thus with more than 2 possible reference voltages.

## Claims

1. Deflection circuit for a cathode ray tube with a deflection coil (L_{defl}), at least an S-capacitor (C_{S}) and a linearity coil (Lₗᵢₙ) wound around a magnetic core,
**characterised by**
- a control coil (L_{control}) wound around the magnetic core and by
- a control circuit for supplying a current in the control coil.

2. Deflection circuit according to claim 1, wherein said control circuit includes means for adjusting the current in the control coil (L_{control}).

3. Deflection circuit according to claim 1, wherein said control circuit includes means for adjusting the current in the control coil (L_{control}) in a range comprising positive and negative values.

4. Deflection circuit according to claim 1 to 3, wherein said control circuit includes a controller (REGUL) for switched-mode generation of a voltage creating the current in the control coil (L_{control}).

5. Deflection circuit according to claim 4, wherein the controller is connected to a feedback loop whereby the current in the control coil (L_{control}) is regulated to an adjustable value.

6. Deflection circuit according to claim 5, wherein the feedback loop includes a comparator (COMP) which carries on a first input a voltage representative of the current in the control coil (L_{control}) and on a second input an adjustable voltage (V_{ref}).

7. Display device with a cathode ray tube and a deflection circuit according to any of the preceding claims.

8. Display device with a cathode ray tube and a deflection circuit according to claim 5, wherein the display device has the ability to display images according to a plurality of formats and wherein said adjustable value is dependent on the format.

9. Display device with a cathode ray tube and a deflection circuit according to claim 6, wherein the display device has the ability to display images according to a plurality of formats and wherein said adjustable voltage (V_{ref}) is dependent on the format.
